# EUROPÄISCHE PATENTSCHRIFT

(11) **EP 2 446 172 B1**
(45) Veröffentlichungstag und Bekanntmachung des Hinweises auf die Patenterteilung: **06.03.2013**
(21) Anmeldenummer: 11740572.0
(22) Anmeldetag: 29.07.2011
(51) Int. Cl.: F16H 48/40, F16H 55/06

(54) **DIFFERENTIAL FÜR KRAFTFAHRZEUGE**
DIFFERENTIAL FOR MOTOR VEHICLES
DIFFERENTIEL POUR VEHICULES AUTOMOBILES

(30) Priorität: 15.12.2010 DE 102010054655; 15.09.2010 DE 102010045451
(43) Veröffentlichungstag der Anmeldung: 02.05.2012
(73) Patentinhaber: SONA BLW Präzisionsschmiede GmbH, 42859 Remscheid (DE)
(72) Erfinder: GROEBEL, Christoph, 42855 Remscheid (DE)
(74) Vertreter: Grättinger Möhring von Poschinger Patentanwälte Partnerschaft
(86) Internationale Anmeldenummer: PCT/EP2011/003811
(87) Internationale Veröffentlichungsnummer: WO 2012/034618

(56) Entgegenhaltungen:
- EP-A1- 0 356 276
- WO-A1-2008/040375
- DE-A1- 4 417 373
- DE-A1- 10 014 875
- US-A1- 2005 032 601

## Beschreibung

Die Erfindung betrifft ein Differential für Kraftfahrzeuge gemäß dem Oberbegriff von Patentanspruch 1.

Ein derartiges Kraftfahrzeug-Differential ist in US 2005/032601 A1 beschrieben.

Andere vergleichbare Differentiale mit Ausgleichsgehäuse und mit diesem drehfest verbundenem Antriebszahnrad sind aus DE 4417373 A1, DE 1810520 A, US 4455889 A und US 3554055 A bekannt.

Dem gegenüber liegt der vorliegenden Erfindung die Aufgabe zugrunde, ein festigkeitsoptimiertes Differential der eingangs genannten Art zu schaffen, bei welchem das Ausgleichsgehäuse besonders einfach ausgebildet ist, aus wenigen Bauteilen besteht, aber dennoch eine erhebliche Einsparung an Gewicht und Bauraum bei niedrigen Herstellungskosten ermöglicht.

Diese Aufgabe wird erfindungsgemäß durch eine Ausgestaltung des eingangs genannten Differentials gemäß dem Kennzeichen von Patentanspruch 1 gelöst.

Das erfindungsgemäße Differential zeichnet sich aus durch ein extrem einfach gestaltetes Ausgleichsgehäuse, welches vorteilhaft aus einem Rohrabschnitt gefertigt, z. B. als Abschnitt von einem Stahlrohr oder einem Faserverbundwerkstoff ausgebildet ist, und in welchem zwei diametrale Achswellenbohrungen zur Durchführung der Achsantriebswellen und zwei diametrale Bolzenbohrungen zur Aufnahme des Mitnehmerbolzens vorgesehen sind. Erstere sind um die Drehachse des Ausgleichsgehäuses zentriert, die Achsen letzterer liegen in einer zur Drehachse senkrechten Mittelebene zwischen den Achswellenbohrungen entsprechend einem üblichen Differentialaufbau. Es versteht sich von selbst, dass das Antriebszahnrad drehfest mit der Außenseite des Ausgleichsgehäuses verbunden ist, derart, dass das Motorantriebsdrehmoment über das Antriebszahnrad auf das Ausgleichsgehäuse und von diesem über den Mitnehmerbolzen und die Ausgleichskegelräder gleichmäßig auf die Achswellenkegelräder übertragen wird. Da die Ausgleichskegelräder um den Mitnehmerbolzen frei drehbar gelagert sind, können sie die Funktion des Differentials erfüllen, indem sie mit unterschiedlichen Drehzahlen rotieren und dabei eine gleichmäßige Momentenübertragung über die Achswellenkegelräder auf die Achsantriebswellen gewährleisten.

Durch die erfindungsgemäßen Rücknahmen an beiden Enden des rohrförmigen Ausgleichsgehäuses wird die der Erfindung zugrunde liegende Aufgabe einer Gewichts- und Materialeinsparung gelöst, indem die Rücknahmen den Achswellenbohrungen und den Bolzenbohrungen angenäherte Ausschnitte des Ausgleichsgehäuses beschreiben. Diese die Rücknahmen bildenden Ausschnitte entsprechen somit den Endkanten des rohrförmigen Ausgleichsgehäuses. Wenn vorteilhaft die Rücknahmen des Ausgleichsgehäuses bezüglich der Rohrachse symmetrisch verlaufen, besteht die Möglichkeit, mehrere Ausgleichsgehäuse praktisch ohne Rohrverschnitt von einem standardmäßig erhältlichen Rohr abzutrennen, womit eine erhebliche Materialeinsparung erzielbar ist.

Zur Gewährleistung der mechanischen Steifigkeit des Ausgleichsgehäuses ist es zweckmäßig - falls die Geometrie der den Achswellenbohrungen und den Bolzenbohrunden zugeordneten Lagerflächen dadurch nicht beeinträchtigt wird-, dass die Ausschnitte jeweils mit etwa gleichem Abstand von diesen Bohrungen verlaufen, unabhängig davon, ob diese Bohrungen gleiche oder unterschiedliche Durchmesser aufweisen. Durch eine derartige Optimierung des Verlaufs der Ausschnitte an den Enden des rohrförmigen Ausgleichsgehäuses kann sowohl den wirtschaftlichen als auch den technischen Voraussetzungen für die Herstellung eines Ausgleichsgehäuses, welches der erfindungsgemäßen Aufgabe gerecht wird, voll entsprochen werden.

Stahlrohre aus vergüteten oder unvergüteten Stählen stellen wegen ihrer hohen Grundfestigkeit das ideale Halbzeug für die Herstellung des erfindungsgemäßen Differentialgehäuses dar. Bei niedrigen Kosten für das Halbzeug ergeben sich zudem Einsparungen durch geringe Bauteilquerschnitte. Die dabei erzielte Gewichtseinsparung wird noch weiter verbessert durch eine Optimierung des Verlaufs der Rücknahmen wie vorstehend erläutert.

Zudem besteht die Möglichkeit bei Wahl einfacher Bauteile aus Stahlrohr das Differentialgehäuse zur zusätzlichen Gewichtseinsparung in Sandwichbauweise, z. B. mit einem Zwischenrohr aus Faserverbundwerkstoff herzustellen.

Bei Verwendung von Stahlrohren als Halbzeug und einer geeigneten Trenntechnologie wie dem Drahterodieren ist die Herstellung eines erfindungsgemäßen Ausgleichsgehäuses mit minimalem Aufwand verbunden. Ergänzend zum Zuschnitt des rohrförmigen Halbzeugs sind Führungseinsätze aus Stahl oder in Kombination mit einem geeigneten Faserverbundwerkstoff aus Kunststoff vorteilhaft, welche in den Achswellenbohrungen befestigt sind, und Führungsflächen zur Abstützung der Achswellenkegelräder aufweisen sowie der Lagerung des Differentials dienen; gleiches gilt für derartige Führungseinsätze, welche in den Bolzenbohrungen befestigt sind und welche Führungsflächen zur Abstützung der Ausgleichskegelräder aufweisen sowie der Lagerung des Mitnehmerbolzens dienen. Diese Führungseinsätze werden mit dem rohrförmigen Ausgleichsgehäuse z. B. durch Laserschweißen verbunden.

Anstelle von Führungseinsätzen besteht die Möglichkeit, die Ränder der Bolzenbohrungen einerseits und der Achswellenbohrungen andererseits derart auszubilden, dass sie Führungsansätze zur Abstützung der Ausgleichskegelräder bzw. der Achswellenkegelräder bilden. Gesonderte Führungseinsätze erübrigen sich dadurch.

Bei der Ausbildung der Führungsansätze ist zu beachten, ob Ausgleichs- bzw. Achswellenkegelräder verwendet werden, welche konzeptabhängig entweder als Schaft- oder als Kugelräder ausgebildet sind, d.h. ob deren rückwärtigen Anschlag- bzw. Führungsflächen eben oder sphärisch gestaltet sind. Auch sog. Schulterräder mit zylindrischen Anschlag- bzw. Führungsflächen kommen infrage.

Nach einer weiteren Ausführungsform der Erfindung ist vorgesehen, dass das Ausgleichsgehäuse beidseitig im Bereich der Bolzenbohrungen jeweils eine über dessen gesamte Länge durchgehende, z. B. durch Umformen erzeugte Abflachung seiner Außenseite aufweist.

Durch eine derartige umformtechnisch erzeugte Abflachung wird nicht nur die Anbindung des Antriebszahnrads längs ebener Kontaktflächen für die Schweißverbindung vereinfacht. Dadurch, dass die Abflachung durch Umformen entsteht, ergibt sich eine zusätzliche Kaltverfestigung des Materials, wodurch die Gehäusesteifigkeit verbessert wird.

Ein zusätzlich aussteifender Effekt kann noch dadurch erzielt werden, dass das Ausgleichsgehäuse mit einer Mehrzahl von der Aussteifung dienenden Sicken versehen ist, welche in ihrer Zahl, Formgebung und Ausrichtung beliebig sein können, bevorzugt aber eine nach innen vorspringende Vertiefung ausbilden.

Darüber hinaus kann das Ausgleichsgehäuse mit einer Mehrzahl von Durchbrechungen oder Ausnehmungen zur weiteren Gewichtsersparnis versehen sein.

Die Verbindung zwischen dem Antriebszahnrad und dem rohrförmigen Ausgleichsgehäuse kann noch dadurch verbessert werden, dass das Antriebszahnrad außen längs Mantellinien des Ausgleichsgehäuses verlaufende Kontaktflächen aufweist. Diese Kontaktflächen sind zweckmäßig entsprechend der Oberflächengestaltung des Ausgleichsgehäuses ausgebildet, z.B. als ebene Flächen bei Ausgleichsgehäusen mit Abflachung oder als im Querschnitt sphärische Flächen entsprechend der Krümmung bei einem zylindrischen Ausgleichsgehäuse.

Anstelle eines im Querschnitt zylindrischen Ausgleichsgehäuses kommen auch profilierte rohrförmige Ausgleichsgehäuse in Frage, beispielsweise mit im wesentlichen quadratischem Querschnitt und abgerundeten Kanten.

Im Rahmen der Erfindung kann der Mitnehmerbolzen hohl oder massiv ausgebildet oder mit Ausnehmungen versehen sein. Hohle Stahlbolzen können durch Ausspritzen mit Faserverbundwerkstoff oder Kunststoff mit Füllmaterial steifigkeitsoptimiert werden. Nach seinem Einschieben in die entsprechenden Bolzenbohrungen bzw. Führungseinsätze, in denen vorher die Ausgleichskegelräder eingesetzt wurden, kann der Mitnehmerbolzen in axialer Richtung z. B. durch Stifte gesichert oder durch das Antriebszahnrad axial fixiert, ggf. zusätzlich durch Schweißen befestigt werden.

Zur Lagerung des Differentialgehäuses kann es zweckmäßig sein, auf diesem zusätzliche Führungsaufsätze in Verlängerung der Achswellenbohrungen z. B. durch Schweißen zu befestigen. Derartige Führungsaufsätze können jedoch entfallen, wenn die in die Achswellenbohrungen eingesetzten Führungseinsätze bzw. am Gehäuse angeformte Führungsansätze weit genug über das Ausgleichsgehäuse nach außen kragen.

Falls erforderlich, können am Ausgleichsgehäuse von außen zusätzliche Versteifungsstege angebracht werden, welche quer zu den Endbereichen des Ausgleichsgehäuses verlaufen.

Als Antriebszahnrad kommen bevorzugt Zahnräder in verschiedenen Varianten in Frage, z.B. solche mit gerader oder schräger Anbindung der Verzahnung an die Radscheibe. Es können auch verschiedene Verzahnungsgeometrien wie Schräg- oder Hypoidverzahnungen eingesetzt werden.

Zur weiteren Gewichtsersparnis ist das Antriebszahnrad wenn möglich im Durchmesser kleiner dimensioniert als es das Ausgleichsgehäuse in Höhe der Bolzenbohrungen erfordern würde. In diesem Fall wird es außermittig am Ausgleichsgehäuse angebracht.

Wird für das Getriebe und das Differential das gleiche Öl verwendet, hat das Antriebszahnrad keine Dichtfunktion. In diesem Fall wird es vorteilhaft zur Gewichtsminimierung mit möglichst vielen, großen, axial durchgängigen Durchbrechungen versehen sein. Hat es hingegen eine Dichtfunktion, so besitzt es keine Durchbrechungen und muss dicht mit dem Ausgleichsgehäuse verbunden sein, sodass mit seiner Hilfe eine Abdichtung der oberhalb des Rades befindlichen Volumina von den unterhalb des Rades befindlichen Volumina möglich ist.

Im folgenden werden Ausführungsbeispiele der Erfindung anhand der Zeichnung erläutert. Es zeigt
- Fig. 1: einen Querschnitt durch ein Differential mit Antriebszahnrad ohne Dichtfunktion
- Fig. 2: eine frontale Ansicht eines zylindrisches Ausgleichsgehäuses,
- Fig. 3: das Ausgleichsgehäuse gemäß Fig. 2 in der Seitenansicht,
- Fig. 4: eine perspektivische Ansicht eines zylindrischen Ausgleichsgehäuses mit Sicken,
- Fig. 5: eine perspektivische Ansicht eines zylindrischen Ausgleichsgehäuses mit Durchbrechungen,
- Fig. 6: eine frontale Ansicht eines im wesentlichen zylindrischen Ausgleichsgehäuses mit seitlichen Abflachungen,
- Fig. 7: das Ausgleichsgehäuse gemäß Fig. 6 in der Seitenansicht,
- Fig. 8: eine perspektivische Ansicht eines Ausgleichsgehäuses mit etwa quadratischem Querschnitt,
- Fig. 9: ein Antriebszahnrad als Stirnrad mit gerader Anbindung der Radscheibe,
- Fig. 10: einen axialen Querschnitt durch das Stirnrad gemäß Fig. 9,
- Fig. 11: ein Antriebszahnrad als Stirnrad mit schräger Anbindung der Radscheibe,
- Fig. 12: einen axialen Querschnitt durch das Stirnrad gemäß Fig. 11,
- Fig. 13: eine teilweise geschnittene Seitenansicht eines Differentials mit Dichtfunktion des Antriebszahnrads,
- Fig. 14: eine teilweise geschnittene Frontalansicht eines Differentials mit Versteifungsmatrizen und
- Fig. 15: eine teilweise geschnittene Seitenansicht des Differentials nach Fig. 14.

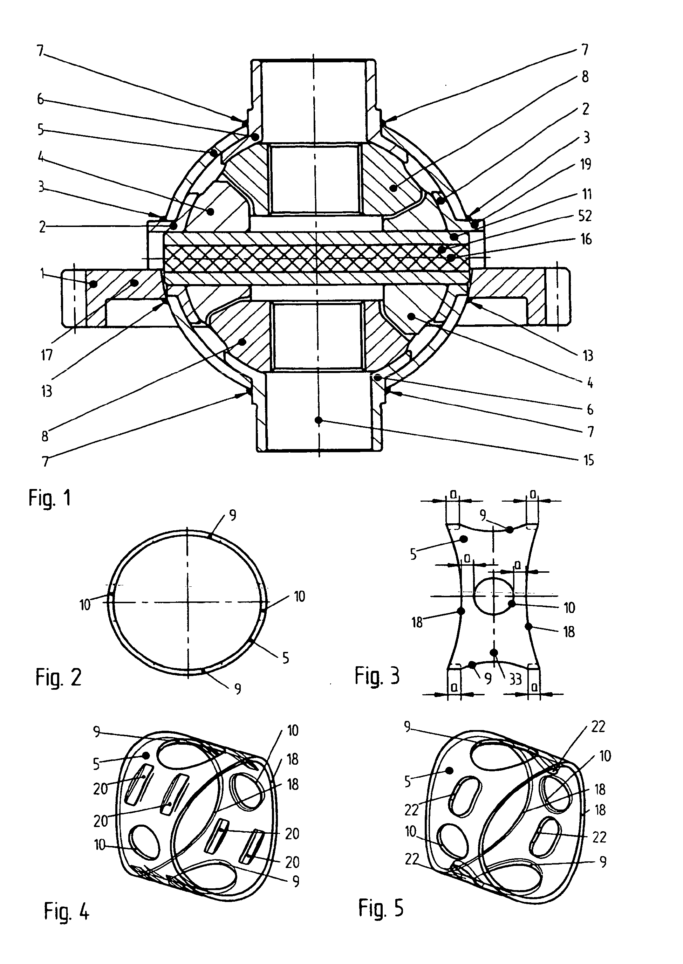

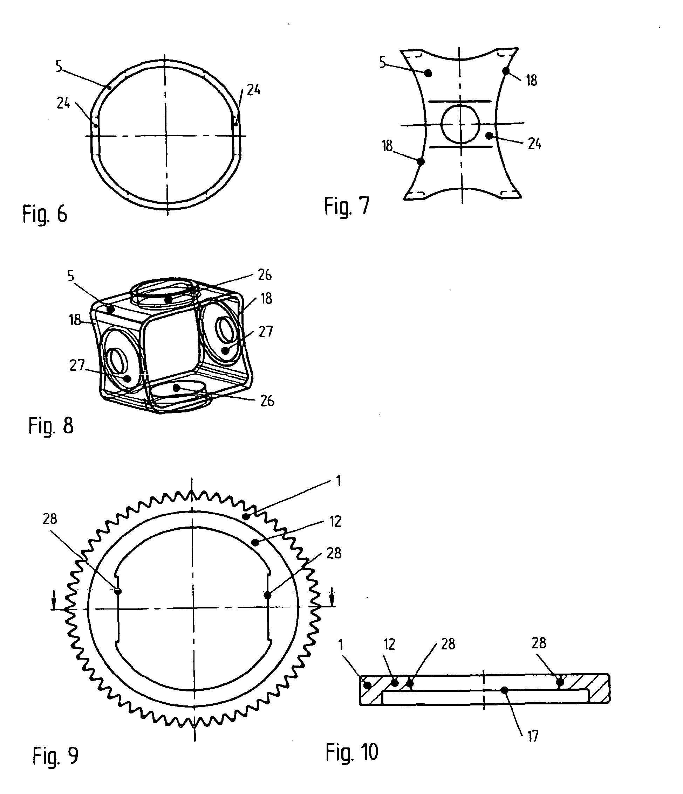

Fig. 1 zeigt ein Differential für ein Kraftfahrzeug in einem Querschnitt durch die Achsen des Differentials, nämlich die Achse 15 der Antriebswellen und die Achse 16 des Mitnehmerbolzens 11. Das Differential gemäß dem vorliegend beschriebenen Ausführungsbeispielumfasst ein zylinderförmiges Ausgleichsgehäuse 5 aus veredeltem oder unveredeltem Stahlwerkstoff, in welchem die Getriebebauteile montiert sind und an dessen Außenseite ein Antriebszahnrad 1 durch Schweißen befestigt ist. Von den beiden Schweißnähten auf gegenüberliegenden Seiten des Ausgleichsgehäuses 5 sind lediglich die Schweißnähte 13 an der Unterseite der Radscheibe 17 des als Stirnrad ausgebildeten Antriebszahnrads 1 eingezeichnet; die gegenüberliegenden Schweißnähte auf der Oberseite der Radscheibe 17 sind in der gewählten Querschnittsdarstellung nicht sichtbar, aber verlaufen entsprechend entlang Mantellinien des Ausgleichsgehäuses 5. Der aus dem Ausgleichsgehäuse 5 austretende Kragenteil 19 der Führungseinsätze 2 für die Bolzenbohrungen ist im Bereich des Antriebszahnrads 1 ausgeschnitten, so dass dessen Radscheibe 17 mit seinen Kontaktflächen 28 (siehe Fig. 10) bis an den Mitnehmerbolzen 11 heranreicht.

Das Ausgleichsgehäuse 5 besitzt Bohrungen für den Mitnehmerbolzen 11 und für die (nicht dargestellten) Achswellen. In diese Bohrungen sind jeweils stählerne Führungseinsätze eingefügt und mit der Außenseite des Ausgleichsgehäuses 5 verschweißt. Die Führungseinsätze 6 für die Achswellenbohrungen sind jeweils mittels einer umlaufenden Schweißnaht 7 befestigt; die Führungseinsätze 2 für die Bolzenbohrungen sind mittels umlaufender Schweißnähte 3 befestigt. An ihren Innenseiten bilden die Führungseinsätze 2, 6 Führungsflächen zur Abstützung der zugeordneten Kegelräder, nämlich der Ausgleichskegelräder 4 bzw. der Achswellenkegelräder 8. Die Ausgleichskegelräder 4 drehen frei auf dem Mitnehmerbolzen 11 und stehen in Eingriffsverbindung mit den Achswellenkegelrädern 8. Die Drehung des Ausgleichsgehäuses 5 wird über die Führungseinsätze 2, den Mitnehmerbolzen 11 und die Ausgleichskegelräder 4 auf die Achswellenkegelräder 8 übertragen.

Der Mitnehmerbolzen 11 aus Stahl ist zur Gewichtseinsparung hohl ausgebildet; er besitzt als Kern eine Versteifungsmatrix 52 aus mit Füllstoff versteiftem Kunststoff.

Ein Ausgleichsgehäuse 5, wie in Fig. 1 dargestellt, ist jeweils verkleinert in verschiedenen Varianten gemäß den Fig. 2-8 als Halbzeug wiedergegeben.

Die Ausführungsform gemäß den Fig. 2 und 3 zeigt ein zylindrisches Ausgleichsgehäuse 5 mit diametral gegenüberliegenden Achswellenbohrungen 9 und Bolzenbohrungen 10. Die Enden der Zylinderform sind jeweils mit einer deren maximale Längserstreckung verkürzenden Rücknahme 18 versehen, deren Ausschnitte gemäß dem gezeichneten Beispiel jeweils mit gleichem Abstand a einerseits zu den Achswellenbohrungen 9, andererseits zu den Bolzenbohrungen 10 verlaufen. Dadurch wird eine Mindeststeifigkeit des Ausgleichsgehäuses gewährleistet unter Berücksichtigung der jeweiligen Bohrungsdurchmesser, wobei gemäß dem gezeigten Beispiel die Bolzenbohrungen 10 einen deutlich geringeren Durchmesser aufweisen verglichen mit den Achswellenbohrungen 9. Die Rücknahme 18 ermöglicht somit eine deutliche Material- und damit auch Gewichtseinsparung bei ausreichender Festigkeit des Ausgleichsgehäuses 5. Die Rücknahme 18 verläuft symmetrisch zur Längsachse 33 des Ausgleichsgehäuses 5, so dass auf einem Vorratsrohr aufeinanderfolgende Gehäuseabschnitte identisch sind, wobei lediglich darauf zu achten ist, dass dann Achswellenbohrungen und Bolzenbohrungen abwechselnd um 90° versetzt anzubringen sind.

Fig. 4 zeigt in perspektivischer Darstellung ein zylindrisches Ausgleichsgehäuse 5, welches abweichend von Fig. 2 zusätzlich acht nach innen vorspringende Sicken 20 aufweist, die der zusätzlichen Aussteifung des Ausgleichsgehäuses 5 dienen.

Fig. 5 zeigt eine andere Ausführungsform eines zylindrischen Ausgleichsgehäuses 5, welches abweichend von Fig. 2 vier Durchbrechungen 22 besitzt, die der Gewichtsreduzierung dienen.

Fig. 6 zeigt wiederum ein im wesentlichen zylindrisches Ausgleichsgehäuse 5, welches abweichend von Fig. 2 seitliche Abflachungen 24 besitzt, deren Ausdehnung in der Seitenansicht gemäß Fig. 7 erkennbar ist. Die Abflachung wird vorteilhaft durch spanlose Umformung der Zylinderform bei gleichzeitiger Kaltverfestigung erzeugt, so dass die Abflachungen 24 der zusätzlichen Versteifung des Ausgleichsgehäuses 5 dienen.

Fig. 8 zeigt ein rohrförmiges Ausgleichsgehäuse 5 mit einem Profilquerschnitt von etwa quadratischer Form mit abgerundeten Ecken. Diese Querschnittsform ist besonders geeignet zum Anformen von nach außen gewölbten Führungsansätzen 26, 27, welche der Abstützung der Kegelräder 8 bzw. 4 dienen. An diesem Beispiel sind die Führungsansätze 26 zur Abstützung von Achswellenkegelrädern 8 des Schaftradtyps geeignet ausgebildet. Entsprechendes gilt für die Führungsansätze 27 zur Abstützung von Ausgleichskegelrädern 4 des Kugelradtyps.

Die Fig. 9 und 10 zeigen in der Ansicht und im Querschnitt ein Antriebszahnrad 1 in Form eines Stirnrads mit gerader Anbindung 12 seiner Radscheibe 17. Am Innenumfang der Radscheibe 17 befindet sich an gegenüberliegenden Seiten jeweils eine sphärische Kontaktfläche 28 zwecks vollflächiger Anlage an der Außenseite eines zylindrischen Ausgleichsgehäuses 5.

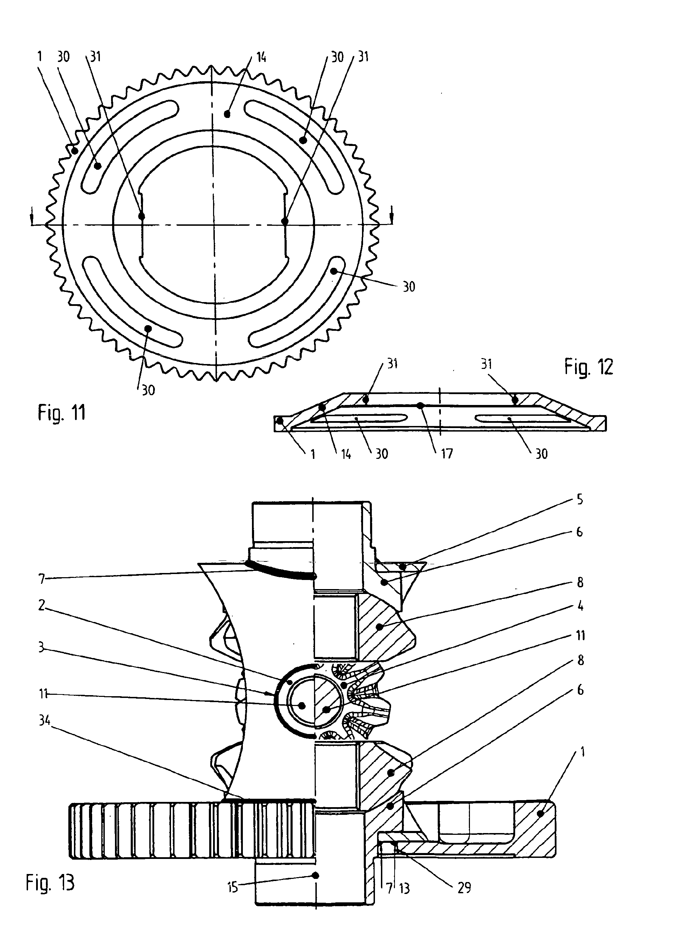

Die Fig. 11 und 12 zeigen ein Antriebszahnrad 1 ebenfalls in Form eines Stirnrads, hier jedoch mit schräger Anbindung 14 an die Radscheibe 17. Die Kontaktflächen 31 sind hier eben ausgebildet, wie es für die Befestigung an einem Ausgleichsgehäuse des Typs mit Abflachung 24 gemäß Fig. 6 zweckmäßig ist. Vier in Umfangsrichtung verlaufende Schlitze 30 dienen der Gewichtsreduzierung des Stirnrads.

Die Fig. 13 zeigt eine Variante zum Differential gemäß Fig. 1, nämlich mit einem Antriebszahnrad 1, welches mit der unteren Seite des Ausgleichsgehäuses (5) dicht verbunden ist. Auf diese Weise wird eine Trennung der Ölvolumina auf beiden Seiten des Antriebszahnrads 1 verwirklicht, sodass unterschiedliche Öle, einerseits für das Getriebe, andererseits für das Differential verwendbar sind. Die Dichtfunktion wird durch eine Schweißnaht 34 auf der Oberseite des Antriebszahnrads 1 längs der Mantellinien des Ausgleichsgehäuses 5 sowie durch eine Schweißnaht 13 innerhalb einer Mittelbohrung 29 auf der Unterseite des Antriebszahnrads 1 erzielt. Auf Ihrer Innenbohrung besitzen die Achswellenräder 8 die für die Momentenübertragung auf die (nicht gezeigte) Antriebswelle übliche Innensteckverzahnung. Im Übrigen sind zu Fig. 1 gleiche Bauteile bzw. Elemente der Zeichnung mit denselben Bezugsziffern wie in Fig. 1 versehen.

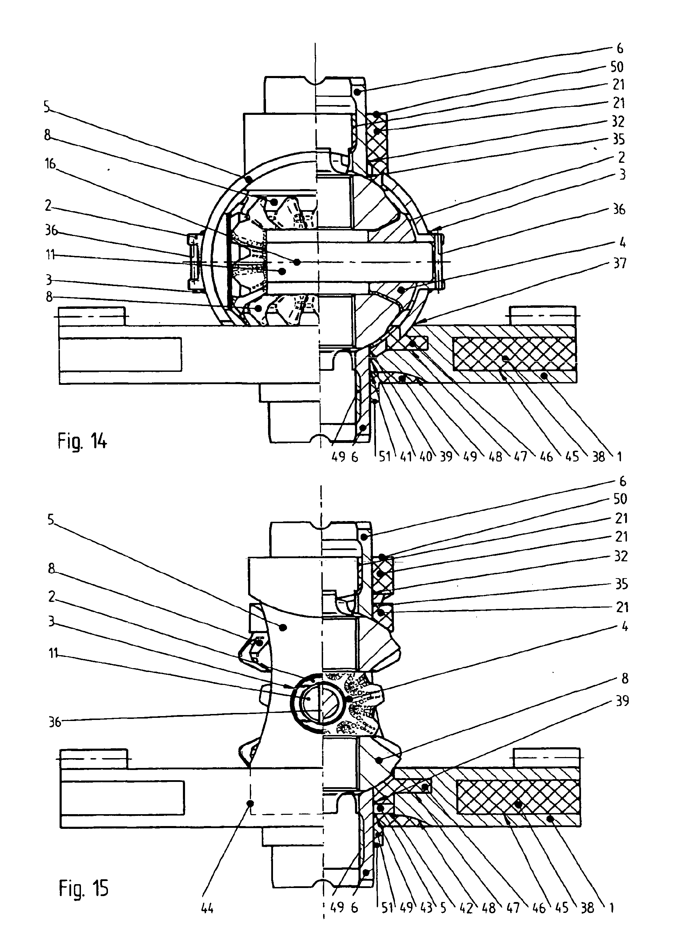

Die Figuren 14 und 15 zeigen am Beispiel eines Differentials mit Versteifungsmatrizen 21, 38, 46, 49 eine
weitere Variante zum Differential gemäß Fig. 1, wobei im Gegensatz zu Fig. 1 hier kein Stirnrad sondern ein grob schematisch dargestelltes Tellerrad als Antriebszahnrad verwendet wird. Fig. 14 zeigt die partiell geschnittene Frontalansicht und Fig. 15 die partiell geschnittene Seitenansicht des gleichen Differentials. Das Ausgleichgehäuse 5 wird in die Innengeometrie des mit mehreren Ausnehmungen 45, 47, 48 versehenen Antriebszahnrads 1 eingesetzt und mit ihm mit entsprechenden Schweißnähten 37, 40, 42 verbunden. Weiterhin werden rohrförmig ausgebildete Führungseinsätze 6 mit dem Ausgleichsgehäuse 5 mit mehreren Schweißnähten 32, 35, 39, 43 und mit dem Antriebszahnrad 1 über eine weitere Schweißnaht 41 verbunden. Die Versteifungsmatrizen 21, 38, 46, 49 werden z. B. durch Kunststoffspritzguss erzeugt; durch sie wird einerseits die Steifigkeit des Gesamtsystems erhöht, andererseits wird durch die Verwendung eines Materials mit einer deutlich geringeren Dichte als Stahl das Systemgesamtgewicht spürbar gegenüber einer Stahlvollvariante reduziert. Zur Optimierung der Steifigkeit sind das Ausgleichsgehäuse 5 und die Führungseinsätze 6 mit hier nur teilweise dargestellten Durchbrechungen versehen, die durch Versteifungsmatrizen ausgefüllt werden. In der dargestellten Variante werden darüber hinaus die Lagerflächen für die Achswellenkegelräder partiell durch zwei Versteifungsmatrizen 21, 46 sowie die Axialanschläge 50, 51 für die Radiallagerung des Differentialsystems durch zwei weitere Versteifungsmatrizen 21, 49 bereitgestellt. Der Mitnehmerbolzen wird durch Stifte 36 axial gesichert. Das Ausgleichsgehäuse 5 ist nicht symmetrisch zur Mitnehmerachse 16 ausgebildet. Seine Außengeometrie ist den Schnittdarstellungen in den Figuren 14 und 15 zu entnehmen und verläuft entsprechend einer gestrichelten Linie 44 in Fig. 15. Zu Fig. 1 gleiche Bauteile sind mit denselben Bezugsziffern versehen.

## Patentansprüche

1. Differential für Kraftfahrzeuge mit einem rohrförmigen Ausgleichsgehäuse (5), in welchem Ausgleichskegelräder (4) auf einem gehäusefesten Mitnehmerbolzen (11) gelagert und mit Achswellenkegelrädern (8) verzahnt sind, wobei das Ausgleichsgehäuse (5) von einem Antriebszahnrad (1) zur Übertragung des Motorantriebsdrehmoments umfasst ist und wobei das Ausgleichsgehäuse (5) zwei
Achswellenbohrungen (9) zur Durchführung der Achsantriebswellen und zwei bezüglich der Rohrachse gegenüberliegende Bolzenbohrungen (10) zur Aufnahme des Mitnehmerbolzens (11) aufweist,
**dadurch gekennzeichnet,**
**dass** die zwei Achswellenbohrungen (9) bezüglich der Rohrachse gegenüberliegend sind, und
**dass** an beiden Enden des Ausgleichsgehäuses (5) Rücknahmen (18) vorgesehen sind, welche den Achswellenbohrungen (9) und den Bolzenbohrungen (10) angenäherte Ausschnitte des Ausgleichsgehäuses (5) beschreiben.

2. Differential nach Anspruch 1,
**dadurch gekennzeichnet,**
**dass** die die Rücknahmen (18) bildenden Ausschnitte bezüglich der Rohrachse des Ausgleichsgehäuses (5) symmetrisch verlaufen.

3. Differential nach Anspruch 2,
**dadurch gekennzeichnet,**
**dass** die Ausschnitte jeweils mit etwa gleichem Abstand (a) von den Achswellenbohrungen (9) und den Bolzenbohrungen (10) verlaufen.

4. Differential nach Anspruch 1,
**dadurch gekennzeichnet,**
**dass** in den Achswellenbohrungen (9) Führungseinsätze (6) befestigt sind, an welchen Führungsflächen zur Abstützung der Achswellenkegelräder (8) vorgesehen sind.

5. Differential nach Anspruch 1,
**dadurch gekennzeichnet,**
**dass** in den Bolzenbohrungen (10) Führungseinsätze (2) befestigt sind, an welchen Führungsflächen zur Abstützung der Ausgleichskegelräder (4) vorgesehen sind.

6. Differential nach Anspruch 1,
**dadurch gekennzeichnet,**
**dass** die Ränder der Bolzenbohrungen (10) zwecks Ausbildung von Führungsansätzen (27) zur Abstützung der Ausgleichskegelräder (4) geeignet ausgebildet sind.

7. Differential nach Anspruch 1,
**dadurch gekennzeichnet,**
**dass** die Ränder der Achswellenbohrungen (9) zwecks Ausbildung von Führungsansätzen (26) zur Abstützung der Achswellenkegelräder (8) geeignet ausgebildet sind.

8. Differential nach Anspruch 6 oder 7,
**dadurch gekennzeichnet,**
**dass** die Führungsansätze (26, 27) zur Abstützung von Achswellenkegelrädern (8) oder Ausgleichskegelrädern (4) in Form von Schulter- bzw. Schafträdern oder Kugelrädern geeignet ausgebildet sind.

9. Differential nach Anspruch 1,
**dadurch gekennzeichnet,**
**dass** das Ausgleichsgehäuse (5) beidseitig im Bereich der Bolzenbohrungen (10) jeweils eine über dessen gesamte Länge durchgehende Abflachung (24) seiner Außenseite aufweist.

10. Differential nach Anspruch 1,
**dadurch gekennzeichnet,**
**dass** das Ausgleichsgehäuse(5) mit einer Mehrzahl von der Aussteifung dienenden Sicken (20) versehen ist.

11. Differential nach Anspruch 1,
**dadurch gekennzeichnet,**
**dass** das Ausgleichsgehäuse (5) mit einer Mehrzahl von Durchbrechungen (22) versehen ist.

12. Differential nach Anspruch 1,
**dadurch gekennzeichnet,**
**dass** das Antriebszahnrad (1) an seinem Innenumfang Kontaktflächen (28, 31) aufweist, welche der Verbindung mit dem Ausgleichsgehäuse (5) dienen.

13. Differential nach Anspruch 1,
**dadurch gekennzeichnet,**
**dass** Ausnehmungen (45, 47) des Antriebszahnrades (1) vorgesehen sind, welche zur Bildung einer Versteifungsmatrix (38, 46) mit Kunststoff, mit Kunststoff mit einem Füllstoff oder mit einem Faserverbundwerkstoff ausgefüllt sind.

14. Differential nach Anspruch 1,
**dadurch gekennzeichnet,**
**dass** Ausnehmungen (47) des Antriebszahnrades (1) und des Ausgleichsgehäuses (5) vorgesehen sind, welche zur Bildung einer Versteifungsmatrix (46) mit Kunststoff, mit Kunststoff mit einem Füllstoff oder mit einem Faserverbundwerkstoff ausgefüllt sind.

15. Differential nach Anspruch 1,
**dadurch gekennzeichnet,**
**dass** mindestens ein Führungseinsatz (6) mit Durchbrechungen versehen ist und zusammen mit Ausnehmungen des Ausgleichsgehäuses (5) und/oder Ausnehmungen (47, 48) des Antriebszahnrads (1) zur Bildung gemeinsamer Versteifungsmatrizen (21, 46, 49) mit Kunststoff, mit Kunststoff mit einem Füllstoff oder mit einem Faserverbundwerkstoff ausgefüllt sind.

## Claims

1. A differential for motor vehicles with a tubular differential housing (5), in which differential bevel gears (4) are supported on a housing-mounted carrier stud (11) and are meshed with halfshaft bevel gears (8), wherein the differential housing (5) is encompassed by a driving toothed wheel (1) for the transmission of the engine driving torque and wherein the differential housing (5) has two halfshaft holes (9) for feeding the axle drive shafts through and two stud holes (10) lying opposite with respect to the tube axis for accommodating the carrier stud (11),
**characterized in that**
the two halfshaft holes (9) are opposite with respect to the tube axis, and
at both ends of the differential housing (5) recesses (18) are provided, which describe cutouts of the differential housing (5) that approach the halfshaft holes (9) and the stud holes (10).

2. The differential according to Claim 1,
**characterized in that**
the cutouts forming the recesses (18) run symmetrically with respect to the tube axis of the differential housing (5).

3. The differential according to Claim 2,
**characterized in that**
the cutouts run respectively at approximately the same distance (a) from the halfshaft holes (9) and the stud holes (10).

4. The differential according to Claim 1,
**characterized in that**
guide inserts (6) are fastened in the halfshaft holes (9), on which guide inserts guide surfaces are provided for supporting the halfshaft bevel gears (8).

5. The differential according to Claim 1,
**characterized in that**
guide inserts (2) are fastened in the stud holes (10), on which guide inserts guide surfaces are provided for supporting the differential bevel gears (4).

6. The differential according to Claim 1,
**characterized in that**
the edges of the stud holes (10) are constructed in a suitable manner for the purpose of forming guide projections (27) for supporting the differential bevel gears (4).

7. The differential according to Claim 1,
**characterized in that**
the edges of the halfshaft holes (9) are constructed in a suitable manner for the purpose of forming guide projections (26) for supporting the halfshaft bevel gears (8).

8. The differential according to Claim 6 or 7,
**characterized in that**
the guide projections (26, 27) are constructed in a suitable manner for the supporting of halfshaft bevel gears (8) or differential bevel gears (4) in the form of shoulder wheels or respectively shaft wheels or ball wheels.

9. The differential according to Claim 1,
**characterized in that**
the differential housing (5) has on both sides in the region of the stud holes (10) respectively a flat area (24) of its outer side continuing over its entire length.

10. The differential according to Claim 1,
**characterized in that**
the differential housing (5) is provided with a plurality of corrugations (20) serving for reinforcement.

11. The differential according to Claim 1,
**characterized in that**
the differential housing (5) is provided with a plurality of through-holes (22).

12. The differential according to Claim 1,
**characterized in that**
the driving toothed wheel (1) has contact surfaces (28, 31) on its inner circumference, which serve for connection with the differential housing (5).

13. The differential according to Claim 1,
**characterized in that**
openings (45, 47) of the driving toothed wheel (1) are provided, which are filled with plastic, with plastic with a filling material or with a fibre composite material to form a reinforcing matrix (38, 46).

14. The differential according to Claim 1,
**characterized in that**
openings (47) of the driving toothed wheel (1) and of the differential housing (5) are provided, which are filled with plastic, with plastic with a filling material or with a fibre composite material to form a reinforcing matrix (46).

15. The differential according to Claim 1,
**characterized in that**
at least one guide insert (6) is provided with through-holes and together with openings of the differential housing (5) and/or openings (47, 48) of the driving toothed wheel (1) are filled with plastic, with plastic with a filling material or with a fibre composite material to form shared reinforcing matrices (21, 46, 49).

## Revendications

1. Différentiel pour véhicules automobiles comprenant un boitier de compensation (5) tubulaire dans lequel des pignons coniques de compensation (4) sont montés sur un boulon entraîneur (11) fixe sur le boitier et sont engrenés avec des pignons coniques d'arbre d'essieu (8), sachant que le boitier de compensation (5) est compris par une roue dentée motrice (1) pour transmettre le couple de rotation d'entraînement du moteur et sachant que le boitier de compensation (5) présente deux perçages d'arbre d'essieu (9) pour réaliser les arbres d'entraînement d'essieu et deux perçages de boulon (10) opposés par rapport à l'axe tubulaire pour recevoir le boulon entraîneur (11),
**caractérisé en ce que**
les deux perçages d'arbre d'essieu (9) sont opposés par rapport à l'axe tubulaire, et que
sur les deux extrémités du boitier de compensation (5), des dépouilles (18) sont prévues, lesquelles décrivent des découpes du boitier de compensation (5) rapprochées des perçages d'arbre d'essieu (9) et des perçages de boulon (10).

2. Différentiel selon la revendication 1, **caractérisé en ce que** les découpes formant les dépouilles (18) ont un parcours symétrique par rapport à l'axe tubulaire du boitier de compensation (5).

3. Différentiel selon la revendication 2, **caractérisé en ce que** les découpes ont respectivement un parcours à environ distance égale (a) des perçages d'arbre d'essieu (9) et des perçages de boulon (10).

4. Différentiel selon la revendication 1, **caractérisé en ce que** des inserts de guidage (6) sont fixés dans les perçages d' arbre d' essieu (9) sur lesquels des surfaces de guidage sont prévues pour appuyer les pignons coniques d'arbre d'essieu (8).

5. Différentiel selon la revendication 1, **caractérisé en ce que** des inserts de guidage (2) sont fixés dans les perçages de boulon (10), sur lesquels des surfaces de guidage sont prévues pour appuyer les pignons coniques de compensation (4).

6. Différentiel selon la revendication 1, **caractérisé en ce que** les bords des perçages de boulon (10) sont formés de manière appropriée en vue de la formation d'épaulements de guidage (27) pour appuyer les pignons coniques de compensation (4).

7. Différentiel selon la revendication 1, **caractérisé en ce que** les bords des perçages d'arbre d'essieu (9) sont formés de manière appropriée en vue de la formation d'épaulements de guidage (26) pour appuyer les pignons coniques d'arbre d'essieu (8).

8. Différentiel selon la revendication 6 ou 7, **caractérisé en ce que** les épaulement de guidage (26, 27) sont formés de manière appropriée pour appuyer les pignons coniques d'arbre d'essieu (8) ou les pignons coniques de compensation (4) sous forme de roues à épaulement respectivement à tige ou de roues à bille.

9. Différentiel selon la revendication 1, **caractérisé en ce que** le boitier de compensation (5) présente sur les deux côtés au niveau des perçages de boulon (10) respectivement un méplat (24) de son côté extérieur traversant sur toute sa longueur.

10. Différentiel selon la revendication 1, **caractérisé en ce que** le boitier de compensation (5) est doté d'une pluralité de nervures (20) servant à rigidifier.

11. Différentiel selon la revendication 1, **caractérisé en ce que** le boitier de compensation (5) est doté d'une pluralité de perforations (22).

12. Différentiel selon la revendication 1, **caractérisé en ce que** la roue dentée motrice (1) présente sur son pourtour intérieur, des surfaces de contact (28, 31) qui servent de liaison avec le boitier de compensation (5).

13. Différentiel selon la revendication 1, **caractérisé en ce que** des évidements (45, 47) de la roue dentée motrice (1) sont prévus, lesquels, pour former une matrice de renforcement (38, 46), sont remplis de plastique, de plastique comprenant une charge ou d'un matériau composite renforcé par fibres.

14. Différentiel selon la revendication 1, **caractérisé en ce que** des évidements (47) de la roue dentée motrice (1) et du boitier de compensation (5) sont prévus, lesquels, pour former une matrice de renforcement (46), sont remplis de plastique, de plastique comprenant une charge ou d'un matériau composite renforcé par fibres.

15. Différentiel selon la revendication 1, **caractérisé en ce qu'**au moins un insert de guidage (6) est doté de perforations et, conjointement avec des évidements du boitier de compensation (5) et/ou des évidements (47, 48) de la roue dentée motrice (1), pour former des matrices de renforcement communes (21, 46, 49), est rempli de plastique, de plastique comprenant une charge ou d'un matériau composite renforcé par fibres.
